(19)

**Europäisches Patentamt**
**European Patent Office**
**Office européen des brevets**

(11) **EP 4 314 800 B1**

(12) **EUROPEAN PATENT SPECIFICATION**

(45) Date of publication and mention
of the grant of the patent:
**12.03.2025 Bulletin 2025/11**

(21) Application number: **22718950.3**

(22) Date of filing: **29.03.2022**

(51) International Patent Classification (IPC):
**G01N 29/04** (2006.01)     **G01N 29/11** (2006.01)

(52) Cooperative Patent Classification (CPC):
**G01N 29/043; G01N 29/045; G01N 29/11;**
G01N 2291/012; G01N 2291/015; G01N 2291/0258;
G01N 2291/02854; G01N 2291/0425;
G01N 2291/0427

(86) International application number:
**PCT/EP2022/058253**

(87) International publication number:
**WO 2022/207634 (06.10.2022 Gazette 2022/40)**

(54) **ACOUSTIC INSPECTION DEVICE AND INSPECTION METHOD USING AN INVERSE WAVE FIELD PROPAGATION MODEL**

AKUSTISCHE INSPEKTIONSVORRICHTUNG UND INSPEKTIONSVERFAHREN UNTER BENUTZUNG EINES INVERSEN WELLENFELDAUSBREITUNGSMODELLS

DISPOSITIF D'INSPECTION ACOUSTIQUE ET PROCÉDÉ D'INSPECTION UTILISANT UN MODÈLE DE PROPAGATION D'UN CHAMPS D'ONDE INVERSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2021 EP 21165689**

(43) Date of publication of application:
**07.02.2024 Bulletin 2024/06**

(73) Proprietor: **Nederlandse Organisatie voor toegepast-natuurwetenschappelijk Onderzoek TNO**
**2595 DA 's-Gravenhage (NL)**

(72) Inventors:
• **VOLKER, Arno Willem Frederik**
**2595 DA 's-Gravenhage (NL)**
• **MERKS-SWOLFS, Egon Jacobus Wilhelmus**
**2595 DA 's-Gravenhage (NL)**
• **VAN DER BURG, Dennis Wilhelmus**
**2595 DA 's-Gravenhage (NL)**

• **DUIJSTER, Adrianus Johannes**
**2595 DA 's-Gravenhage (NL)**

(74) Representative: **V.O.**
**P.O. Box 87930**
**2508 DH Den Haag (NL)**

(56) References cited:
**KR-B1- 101 693 710**

• **PÖRTZGEN N ET AL: "Advances in Imaging of NDT Results", WCNDT. WORLD CONFERENCE ON NDT, XX, XX, 30 August 2004 (2004-08-30), pages 1 - 8, XP002311012**
• **NIELS PORTZGEN ET AL: "Inverse wave field extrapolation: a different NDI approach to imaging defects", IEEE TRANSACTIONS ON ULTRASONICS, FERROELECTRICS AND FREQUENCY CONTROL, IEEE, US, vol. 54, no. 1, 1 January 2007 (2007-01-01), pages 118 - 127, XP011152438, ISSN: 0885-3010, DOI: 10.1109/ TUFFC.2007.217**

**Description**

Field of the invention

The invention relates to an acoustic inspection device and inspection method for inspecting a plate of solid material.

Background

Irregularities in the propagation of Lamb waves through a plate can be used to detect thickness variations in the plate. For a given frequency, defects in the plate give rise to ultrasound energy at other wavelengths than those defined for that frequency by the dispersion relation for the Lamb modes. Frequency-wavenumber (f-k) selective detection at combinations of frequency-wavenumber outside those defined by the dispersion relation for Lamb wave modes can be used to detect defects.

A laser Doppler vibrometer may be used to detect such defects from a distance by transmitting laser light to the plate and receive back reflected light. Standing wave energy of the vibrations may be isolated by extracting the energy of propagating waves. Use of a laser Doppler vibrometer to detect Lamb waves in this way is described in an article by Flynn et al. titled "Toward utilizing Full-field Laser-Ultrasound for Practical Nondestructive Inspection with Acoustic Wavenumber Spectroscopy" published in 2018 IEEE International Ultrasonics Symposium (IUS), Kobe, Japan, 2018, pp. 1-7. Flynn et al. use harmonic excitation to enable use of low power lasers and rapid scanning. Wave number spectroscopy is used to detect defects. This method uses steady state excitation at a single frequency. A high-pass wavenumber filter is used to extract only the lowest order asymmetric Lamb wave mode (A0). The peak intensity in the filtered wavenumber intensity diagram is selected, which corresponds to the A0 mode.

Use of a laser Doppler vibrometer is also described in an article titled "Visualization of hidden delamination and debonding in composites through noncontact laser ultrasonic scanning" published in Composites Science and Technology 100 (2014) 10-18. However, the authors of this article have filed patent application KR101693710, which notes that laser scanning ultrasound imaging technology has several limitations that real-time imaging is impossible, citing a low signal-to-noise ratio (SNR) of the acquired signals, and the need for a high power laser for excitation.

KR101693710 instead proposes the use of mechanical excitation and the use of a MEMS microphone array to sense leakage of sound into the air due to Lamb waves in a plate. A device is disclosed that detects defects in a plate by means of leakage of Lamb waves from the plate. The device comprises a Piezo transmitter on the plate to generate the Lamb waves in the plate and an array of Micro Electro Mechanical System (MEMS) microphones outside the plate for time and position dependent measurements of ultrasound waves created by Lamb waves that leak out of the plate. The device applies adaptive frequency-wavenumber (f-k) selective filtering to the time and position dependent measurements to extract ultrasound energy due to defects. KR101693710 applies such (f-k) selective detection to ultrasonic energy that has leaked from the plate into the air. The leakage makes it possible to perform measurement of frequency-wavenumber combinations (f-k) of the vibrations in the plate with microphones close to the plate.

However moving the microphones close to the plate to many positions during a scan over a large plate area can make this kind of inspection difficult and slow and can create the risk of damage to the plate.

Inverse wave field extrapolation is described in an article by Pörtzgen et al in an article titled "Inverse Wave Field Extrapolation: A Different Approach to Imaging defects", published in published in the IEEE transactions on ultrasonics ferroelectrics and frequency control Vol 54 pages 118- 127 (EPO reference XP011152438). This article describes use of measured ultrasound signals due to an incoming wave field at an array of locations to extrapolate the measurements to a reconstruction of the wave field at different distances from the array. This can be done on a point by point basis, to produce an image as if it were produced at a distance from the array.

Pörtzgen further published an article "Advances in Imaging of NDT results" WCNDT World Conference on NDT (2004-8-30) pages 1-8 (EPO reference XP002311012). This article also describes ultrasonic inspection using inverse wave field extrapolation. Inverse wave field extrapolation was known from seismic exploration, which involves measuring values of a wave field at an array of ultrasound transducers and using these values to extrapolate the wave field to locations elsewhere. Each of the transducers can be used as source of the field.

Pörtzgen proposes to apply this to industrial non-destructive ultrasound inspection in order to inspect the location, orientation, shape and size of defects. Examples of resulting wave field images for various objects are shown to illustrate that defects can be characterized and sized with minimal assumptions about defect orientation and without requiring a reference or calibration.

Summary

Among others it is an object to provide for an improved sound leakage based inspection device and method that provides for use of leakage of sound from the surface of a structure such as a plate into a fluid medium, such as air.

A method according to claim 1 is provided. The method may be applied using Lamb waves in a plate as structure under inspection, but it may also be used with interface waves in a structure, such as a Rayleigh wave or Scholte wave to measure a property such as local stiffness variation. It has been found that by additionally obtaining at least one parameter of an inverse wave field propagation model, it is possible to obtain a direct velocity map that is useful for accurate detection of local thickness and/or stiffness variations by applying the inverse wave field propagation model to signals measured with an array of microphones at a distance from the structure. In an example, the at least one parameter may represent a displacement distance between the plate and the array of microphones.

This method makes it easier to use acoustic leakage for mapping by making it possible to move and keep the microphones at some distance from the surface of the structure, while maintaining high mapping resolution. A reduction of resolution may arise because the surface of the structure refracts the sound as the vibrations leak from the surface to the surrounding fluid medium, that is, it changes the direction of propagation and thereby the apparent wavelength perceived at the array of microphones. Parts of sound that are generated by different wave phase velocities have different propagation directions between the plate surface and the array of microphones. This causes reception of mixed of sound with different phase velocities from different positions on the plate surface.

The application of the inverse wave field propagation model with at least one parameter that is adapted to the measurement position of the array of microphones relative the surface of the plate makes it possible to maintain much of the spatial resolution that can be measured at the surface of the plate. It has been found that this is feasible even when the distance between the plate and the array of microphones is so large that individual microphones receive a broad mix of soundwaves with different phase velocities from different locations on the surface of the plate.

In an embodiment wherein the surface of the plate is at least locally flat and the array of microphones is substantially flat and parallel to the local surface of the plate, the parameter of the inverse wave field propagation model can be obtained by obtaining a measurement of the distance between the surface of the plate and the array of microphones. In this embodiment, the inverse wave field propagation model is a predetermined mathematical expression for the inverse wave field propagation in the fluid medium between parallel flat surfaces, with this distance as a parameter. The measurement of the distance may be obtained by means of a distance sensor, or with the aid of the array of microphones.

However, the surface of the plate does not need to be flat. In an embodiment, an inverse wave field propagation model may be used together with parameters that express the shape of the surface.

The array of microphones may be a physical array containing microphones at different locations at the same time, for example in a flat plane of location and/or a regular two dimensional grid of locations. Alternatively, an at least partly synthetic array may be used, which is realized by moving at least one microphone relative to the structure along a direction transverse to the normal direction of at least part of the surface of the structure, and obtaining the measured signals in sync with the generation of the vibrations. For example, the at least one microphone may form a sub-array of microphones located at a linear array of locations at the same time, and the sub-array may be moved transverse to this linear array.

In another aspect an acoustic inspection device according to claim 11 is provided.

Detailed description of exemplary embodiments

These and other objects and advantages will become apparent from a description of exemplary embodiments with reference to the following figures.

Figure 1 shows an acoustic inspection device
Figure 2 shows a flow-chart of surface mapping
Figures 3a-c show a true surface map and reconstructed surface maps without computing the effect of applying the inverse wave field propagation
Figure 4 shows a flow chart of shape estimation
Figures 5a, b show surface maps reconstructed with inverse wave field propagation, without compensation for curvature
Figures 6 shows a reconstructed surface map of a curved surface with compensation for curvature

Detailed description of exemplary embodiments

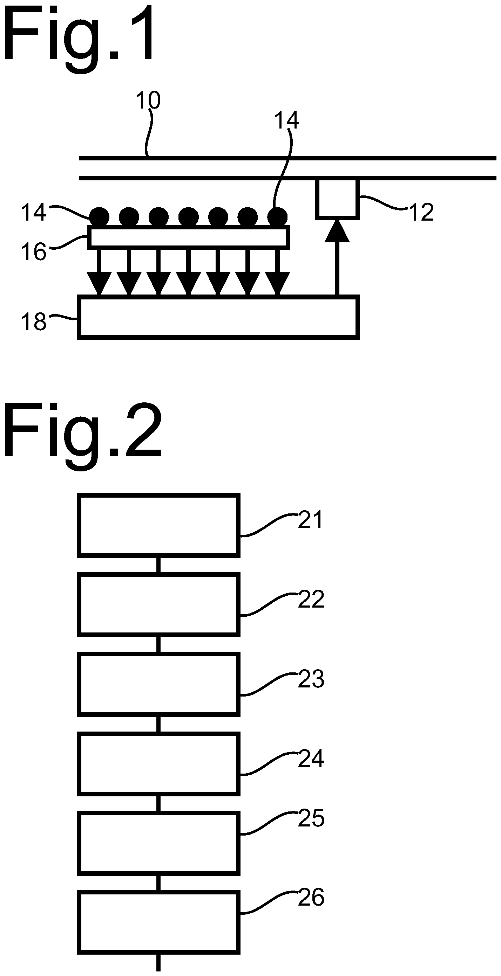

Figure 1 shows an acoustic inspection device together with a plate under inspection 10. The ultrasonic inspection device comprises a transducer 12, an array of microphones 14, a support structure 16 and a processing system 18. The array of microphones comprises microphones fixed to support structure 16, preferably in an array of positions. In an embodiment, microphones 14 are MEMS microphones (Micro Electro Mechanical System). A MEMS microphone is a device that comprises a pressure-sensitive diaphragm, e.g. a flexible membrane over an opening (e.g. a chamber) in a substrate, and a transducing element to convert flexing of the diaphragm into an electric signal. Such a device may be manufactured on the substrate using photolithographic techniques known from IC manufacturing. The MEMS microphone may also include an integrated preamplifier, an Analog-to-Digital converter, or any other electrical circuits that interface the MEMS element to external electrical systems. Such circuits may be included in an Application Specific Integrated Circuit (ASIC). MEMS microphones have the advantage that they provide for efficient conversion of sound vibrations in a gas like air into electric signals and that a dense array of microphones can easily be realized. MEMs accelerometers may be used as microphones. In an embodiment a linear array of 128 microphones 14 is used, but instead a 2D array may be used and of fewer or more microphones may be used. Processing system 18 is electronically coupled to transducer 12 and the microphones 14 of the array.

In an operational configuration, transducer 12 is in contact with plate 10. Microphones 14 are located at a distance from plate 10, e.g. at a distance between 50 to 250 mm, e.g. at 100 mm. The space between microphones 14 and plate 10 may be filled with air or water for example, and more generally with any fluid medium.

In an embodiment microphones 14 are moved in parallel to plate 10. The ultrasonic inspection device may comprise a motion actuator (not shown), such as a robot arm, whereon support structure 16 is mounted and the movement of which is controlled by processing system 18, for moving array of microphones 14 relative to plate 10.

Figure 2 shows a flow-chart of surface mapping. In a first step 21, processing system 18 controls transducer 12 to generate vibrations in plate 10. For example transducer 12 may be made to generate a pulse of vibrations at a single time domain frequency , e.g. a frequency in in the range of 20kHz-1MHz or 30-300kHz. The vibrations propagate as Lamb waves from the position of transducer 12 through plate 10. Although an embodiment using a single transducer 12 is discussed, it should be noted that a plurality of transducers at different positions on plate 10 may be used, preferably configured to transmit vibrations in a fixed phase relation relative to each other.

At the surface of plate 10 surface vibrations due to the Lamb waves create sound in the air surrounding plate 10, preferably ultrasound (as used herein the term "sound" covers both audible sound and ultrasound). In a second step 22, processing system 18 reads received sound signals from microphones 14. Such sound signals are due to sound created in the medium at the surface of plate 10 by vibrations of the surface of plate 10 due to Lamb waves in plate 10, and propagation of the created sound to microphones 14. Preferably the positions of the microphones are sufficiently close to each other so that spatial sampling of the sound at the positions of the microphones satisfies sampling criteria that suffice to enable reconstruction of a continuous sound field on the surface of the array.

Preferably, the measurements are performed in sync with the vibrations applied by transducer 12, e.g. by measuring phase difference between the signals at the microphones and the generated vibrations, or more generally measuring the signals at the microphones as a function of time from a reference time point in the generation of the vibrations. Using signals that are measured in sync makes it possible to synthesize measurements from at least one microphone over a large one or two dimensional range of microphone positions by moving the at least one microphone or an array of microphones 14 relative to plate 10. In this way a synthetic array of microphones may be realized. Means to synthesize an array of microphones comprise a memory to store the synced measurements obtained with the at least one microphone or array of microphones 14 at different positions. For example, when a linear (one dimensional) array is used, synced measurements over a synthetic two dimensional array can be synthesized.

In a third step 23, processing system 18 obtains at least one parameter of an inverse wave field propagation model for sound propagation in the fluid medium between the surface of the plate and the array of microphones at a measurement position where the array of microphones is provided relative to plate 10. In an embodiment wherein the inverse wave field propagation model has a distance between the array of microphones 14 and plate 10 as parameter, third step 23 may comprise obtaining a measurement of the distance .In this case the model may define a known mathematical formula to obtain the inverse wave field propagation with the distance as a parameter. Although the flow-chart shows that third step 23 is performed after second step 22, it should be noted that third step 23 may be performed earlier, even before first step 21. Processing system 18 may obtain the measurement of the distance from an external source, or from a part of the ultrasonic inspection device that measures this distance.

In a fourth step 24, processing system 18 computes the effect of applying the inverse wave field propagation model to the received sound signals. This will be discussed in more detail in the following. Subsequently, processing system 18 perform a fifth step 25 of computing a direct velocity map from the result of inverse wave field propagation. This will also be discussed in more detail in the following. Fifth step 25 may be followed by a sixth step 26 of displaying an image of a map of the velocity as a function of position on plate 10.

In an embodiment, array of microphones 14 may be moved relative to plate 10 to successive positions relative to plate 10, and first to fourth steps 21-24 may be repeated for each of the successive positions. Subsequently, a larger map of the velocity may be synthesized from the maps obtained using the successive positions.

In an embodiment, the inverse wave field propagation of fourth step 24 may be preceded by a step of applying time windowing to the received signal to exclude sound signals due to sound propagation between transducer 12 and microphones entirely through the air without involving Lamb waves (the latter generally arriving before the former).

Inverse wave field propagation

Fourth step 24 of computing the inverse surface model is used to make it possible to obtain a useful direct velocity map even when the array of microphones 14 is not directly adjacent to the surface of plate 10.

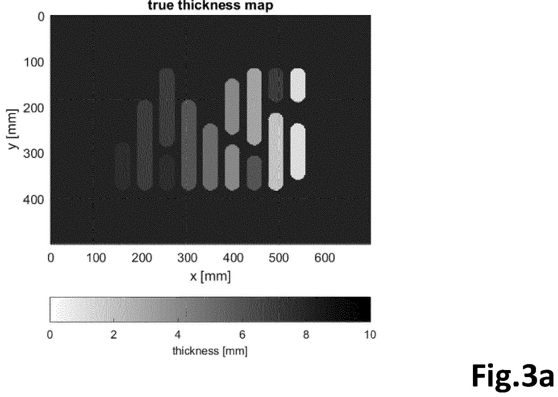

Figures 3a-c illustrate the effect of distance between array of microphones 14 is not directly adjacent to the surface of plate 10 when fourth step 24 is not used. Figure 3a shows a map wherein grey levels are used to represent position dependent thickness of a test plate. If array of microphones 14 would be adjacent to the surface of test plate 10, a substantially identical map can be obtained with the method of figure 2 without fourth step 24.

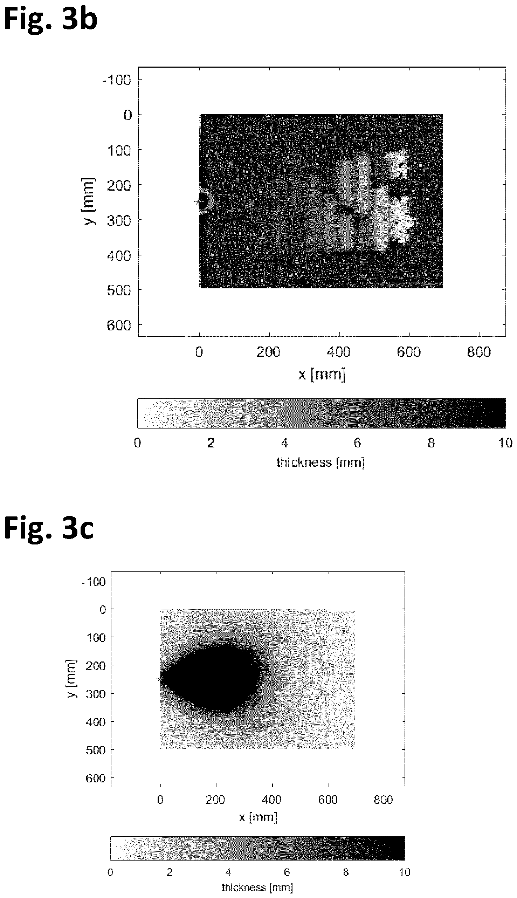

Figures 3b, c show the effect on the mapping of using an array of microphones 14 at a distance from of test plate 10, when the process of figure 2 is used without fourth step 24. Figure 3b shows the reconstructed thickness map obtained when the surface is flat and parallel to the plane of the array of microphones 14 at a distance from the array. As can be seen accuracy is lost, high spatial frequencies are lost and some artifacts occur.

Figure 3c shows the reconstructed thickness map when the surface is curved and at a distance from the array. By comparison with figure 3a it can be seen from the near white area in figure 3c high frequency variation has been lost as in the case of a flat plate at a distance figure 3b. Moreover, the fact that this near white area where figure 3a has dark area indicates that the overall value of the thickness has become inaccurate due to the curvature.

Application of the inverse wave field propagation model comprises computing the wave field at the surface of plate 10 from the wave field represented by the received sound signals. Application of the inverse wave field propagation model suppresses the effect of differences between refraction angle at the fluid medium-plate interface and wave spreading in the space between microphones 14 and plate 10 due to diffraction at defects in plate 10.

From the signal received by each of the microphones 14, a measured wave factor can be determined for the microphone. The wave factor (which should be distinguished from the wave vector) represents the amplitude and phase of the received signal at the microphone 14 relative to a common reference, e.g. relative to the vibrations of transducer 12. Methods for computing a wave field at a surface from wave factors measured at a distance from the surface are known per se, e.g. from measurements that sample a wave factor field on a sensing surface such as the plane of the array of microphones. The computation of the wave field at the surface of plate 10 may be performed by taking a sum over the positions of microphones of terms

$$P(x, y, omega)*exp(i*omega*r/c)*cos (phi)*(1+i*omega*r/c)/r^2$$

Herein omega is the time domain cyclic frequency of the sound and c the speed of sound in the fluid medium between microphones 14 and the surface of plate 10. P(x, y, omega) is the wave factor at a microphone at position x, y. "phi" is the angle between the normal to the array of microphones at position x, y, z, and the normal to the surface of plate 10 at the point on the surface of plate 10 for which the wave field at the surface of plate 10 is computed.

The quantity "r" is the distance from the microphone 14 at (x,y) and the position (x',y') on the surface of plate 10 for which the wave factor is computed, through the space between the array of microphones 14 and the surface of plate 10. The distance r and the angle phi depend on the shape of plate 10 and the relative position (distance and orientation) of array of microphones 14 relative to the surface of plate 10. The distance r and the angle phi as a function of location on plate 10 can be expressed in terms of parameters such as parameters of the shape of plate 10, and one or more parameters that define the relative position of array of microphones 14.

When the array of microphones 14 has a fixed orientation relative to plate 10 and the shape of the surface of plate 10 is known, the distance r for positions (x', y') can be computed using a measurement of a single distance D between reference points on the array of microphones 14 and the surface of plate 10, or other references as a parameter.

The distance D measurement(s) may be input into the acoustic inspection device based on measurement(s) with a device outside the acoustic inspection device. But preferably, the acoustic inspection device is configured to measure the distance(s) itself. For this, the acoustic inspection device may comprise any type of distance sensor, such as a laser distance sensor or an acoustic distance sensor for measuring distance from reflection from plate 10, or a mechanical distance sensor.

In an embodiment wherein acoustic distance sensing is used, a microphone 14 or microphones 14 from the array of microphones may be used in the measurement. For example, the acoustic inspection device may comprise a sound transmitter (not shown) in the fluid medium in fixed spatial relation to array of microphones 14. Processing system 18 may be configured to cause the sound transmitter to transmit a sound pulse, to detect reception of a reflection of the sound pulse by a flat part of plate 10 and to use the time delay between the transmission and reception to estimate the distance D. A non-perpendicular reflection may be used, when account is taken of the angles under which the microphone 14 is able to receives the reflection from different distances.

In an embodiment wherein plate 10 is flat and the array of microphones 14 is parallel to plate 10 application of the inverse wave field propagation model may comprise the use of a Fourier transform domain adjustment in the execution of fourth step 24 by processing system 18. In a first sub-step 241 of fourth step 24 the received signals are used to compute the wave factors. First sub-step 241 is followed by a second sub-step 242 of computing a spatial Fourier transform of an array of the wave factors for different microphones 14 in the array of microphones 14. In a third sub-step 213 the inverse wave field propagation is obtained by applying propagation factors

$$\text{Exp} (i * kz (kx, ky) * D)$$

to the coefficients of the Fourier transform for respective spatial frequencies in the array. Herein D is the measured distance between the microphones 14 and plate 10 and

$$kz(kx, ky) = \text{sqrt} ( (omega/c)^2 - kx^2 - ky^2)$$

The result of applying the propagation factors is an estimate of the spatial Fourier transform of the wave field at the surface of plate 10 for each of the time domain frequencies. Of course, an equivalent can be computed in the spatial domain instead of the spatial Fourier transform domain, using convolutions that corresponding to the effect of the propagation factors.

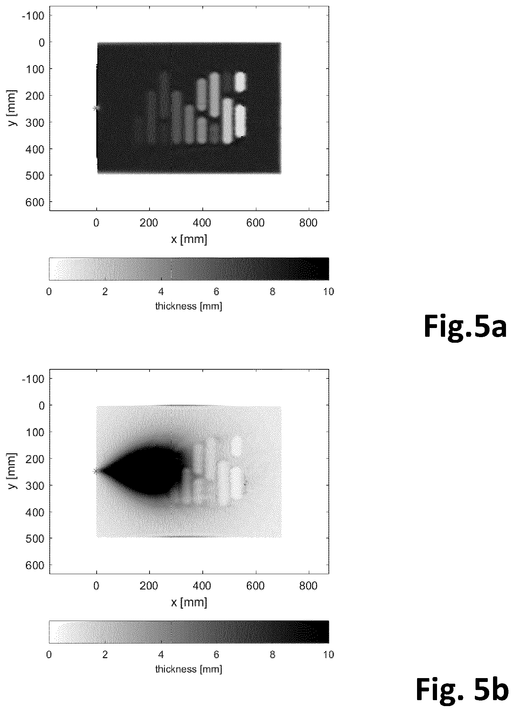

Figure 5a shows a reconstructed surface map of a flat plate obtained when the surface is parallel to but at a distance from the plane of the array of microphones 14, when fourth step 24 of computing this inverse surface model for a flat plate 10 is used. As can be seen, by comparison with figure 3b, fourth step 24 increases the sharpness of the map and reduces artifacts.

Figure 5b shows a reconstructed surface map of a curved plate that is obtained in the same way, i.e. when using a model that does not account for curvature.

When plate 10 is not flat, the more general computation of the wave field at the surface of plate 10 may be used wherein a sum over the positions of microphones of terms

$$P(x, y, omega)*exp(i*omega*r/c)*cos (phi)*(1+i*omega*r/c)/r^2$$

Using values of the distance r and the angle phi according to the shape of plate 10.

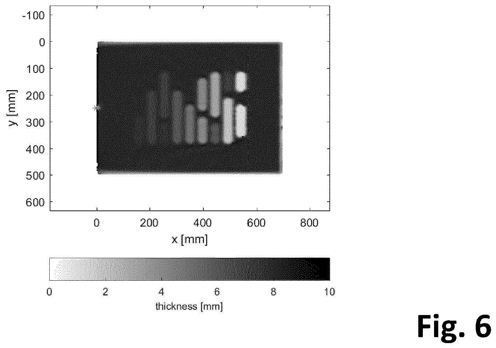

Figure 6 shows a reconstructed surface map of a curved plate obtained is obtained using this more general computation. As can be seen, the effects on the thickness map that were visible in figures 3c and 5b are avoided in this way. By comparing with figure 3a, it can be seen that loss of accuracy has been reduced.

When plate 10 is not flat, parameters of a (local) shape of the surface of plate 10 need to be known to perform the computation. The parameters of the shape of plate may be an array of heights over a reference plane coefficients of polynomials the define such heights, radii and centers of curvature etc. It may suffice to provide such parameters of a local part of the shape of plate 10. Part of the parameters may be known in advance, so that they need not be measured. For example, if the shape is known to be flat, no shape parameters need to be measured, or if the shape is spherical only a radius and a center of curvature are needed as parameters, and part of these may be known in advance. Similarly, if the orientation of array of microphones 14 relative to the surface of plate 10 is known in advance, it need not be measured.

The computation of sum of the terms over positions on the array of microphones 14 for an array of positions at the surface of plate 10 results in a representation of the wave field as a function of position. A Fourier transform of this wave field may be applied to obtain the Fourier transform of the wavefield on the surface of plate 10.

In an embodiment plate 10 may have a curved surface shape that is not flat the more general computation Measurement of the object may be needed to obtain parameters of the shape. In an embodiment, surface vibrations due to the Lamb waves may be used to estimate the shape of plate 10 for obtaining parameters of the inverse wave field propagation model. In particular local wave propagation directions on the array of microphones 14 may be used to estimate the shape.

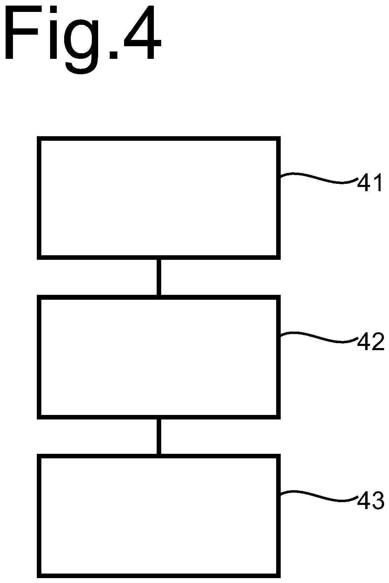

Figure 4 shows a flow chart of a shape estimation process. In a first step 41 processing system 18 obtains signals received by microphones 14 in response to excitation by transducer 12. This will first be described using a single time domain frequency. This may involve the use of an excitation pulse by transducer 12 with a narrow band of frequencies including the time domain frequency, and extracting signals from time windows of the signals of microphones 14 following the pulse.

In a second step 42 processing system 18 estimates local propagation directions on the array of microphones 14 from the extracted signals. This may involve computing spatial Fourier transforms of the extracted signals as a function of position in (possibly soft) spatial windows at a plurality of positions on the array of microphones 14 and determining 2D spatial frequencies at which the amplitude of the Fourier transform peaks in the different spatial windows. For each of the spatial windows, the direction from zero spatial frequency to the determined 2D spatial frequencies may be used as a 2D component of the local propagation direction at that spatial window. Given the 2D component of the direction and the wavelength in the fluid medium, the 3D local propagation direction at each spatial window can be determined.

In a ray model, the 3D local propagation direction at a spatial window provides information about the direction from which the sound has been received at the spatial window. Furthermore, given the index of refraction at the surface of plate 10 for sound that emerges from the surface, the 3D local propagation direction provides information about the orientation of the part of the surface of plate 10 that lies in the direction of reception from the spatial window. The use of a plurality of spatial windows provides such information for a plurality of patches of the surface of plate 10. By combining such orientation information obtained from a plurality of spatial windows the 3D shape of the surface of plate 10 can be estimated. A surface profile $z(x,y)$ of the distance z between the array of microphones 14 as a function position x, y on the array of microphones 14 may be determined that is consistent with such measurements. Gaps can be filled in by optimizing a fitting criterion such as smoothness of the surface profile $z(x,y)$.

In a third step 43 processing system 18 fits a surface profile $z(x,y)$ of the distance z between the array of microphones 14 as a function position x, y on the array of microphones using a model that expresses the local propagation directions as a function of $z(x,y)$. The fitted surface profile $z(x,y)$ can then be used to obtain parameters of the inverse wave field propagation model as described in the preceding.

As described, the surface profile may be determined using excitation for a single time domain frequency. However, preferably a plurality of time domain frequencies is used. Thus improves the signal to noise ratio. When a broadband excitation pulse from transducer 12 is used, received signals of microphones 14 may be extracted from a time window following the pulse and a Fourier transform of the extracted signals from the time domain to the frequency domain may be computed. Alternatively, a plurality of narrow band excitation pulses at different frequencies may be used and signals for different frequencies from microphones 14 may be extracted from time windows following the pulses. This may be used to reduce the effect of wave spreading on the estimate of the 3D local propagation direction.

In an another embodiment, one or more sound transmitters (not shown) in the fluid medium in fixed spatial relation to array of microphones 14 may be used. Sound from sound transmitters in the fluid medium will predominantly be reflected from the surface of plate 10. This may be used in various ways. For example, incoming 3D local propagation direction estimates at the array of microphones may be used to provide orientation information about the part of the surface where the sound was reflected. As another example, the pulse response delay(s) at different microphones after a pulse from the sound transmitters may be used.

If the fluid medium is not homogeneous, a more complicated inverse propagation model may be used that accounts for the inhomogeneity. For example the fluid medium may comprise a gas, such as air, on one side of a boundary surface and liquid, such as water, on the other side of the boundary surface, where the boundary surface lies between array of microphones 14 and the surface of plate 10. In this case, the method may comprise measuring the position of the boundary surface (e.g. its distance to array of microphones 14 if the boundary surface is parallel to array of microphones 14) and using a combination of inverse propagation models for the gas and the liquid, with the position of the boundary as a parameter, as well as a model of the inverse of the effect of refraction and/or reflection at the boundary with that parameter.

Velocity map computation

For a Lamb wave there is a direct relation between the thickness of plate 10 and the phase velocity of a lamb wave. Hence a thickness map of plate 10 can be obtained from measurements of the phase velocity of the Lamb wave as a function of position on the surface of plate 10. Instead of a thickness map, maps of other quantities that are indicative of the thickness or thickness variation. For example, variations the phase velocity as a function of position on the surface of plate 10 are indicative of thickness.

Moreover, for a single time domain frequency, the phase velocity at a position on the surface of plate 10 is inversely proportional to the amplitude of the wave vector at that position (the local spatial rate of change of the wave factor in the local direction of propagation at that position). Hence the amplitude of the wave vector, its inverse and related quantities can be used as an indication of the thickness.

In principle, the phase velocity at a location on the surface of plate 10 may be determined by determining the magnitude of the gradient of the phase of the vibrations at the location, e.g. by estimating the gradient based on the phase value at a plurality of locations on the surface at and/or adjacent to the location for which the phase velocity is determined.

By way of example, an embodiment for computing the direct velocity map from the result of inverse wave field propagation for use in fifth step 25 will be described.

The method comprises applying plurality of filters that pass the vibrations at a position on the surface each in a respective band of wave vector amplitudes at a respective passband frequency k; selecting one of the filters that produces the largest filtered vibration; and using the respective passband frequency k of the selected one of the filters as an indication of the thickness of plate at the position on the surface.

In its simplest form this embodiment uses measurements at a single time domain frequency. In a first sub-step 251 a set of spatial band pass filters is applied to the wave field on the surface of the plate 10. The bandpass filters in the set are indexed by the wave vector amplitude associated with the bandpass filter, substantially independent of its direction.

Each bandpass filter passes wave field components with wave vector amplitude equal to its associated wave vector amplitude and wave vector amplitudes within a filter bandwidth that contains its associated wave vector amplitude.

When applied to the Fourier transform of the wavefield on the surface of the plate 10, this corresponds to multiplication of the Fourier transform of the wavefield as function of position on the surface of the plate 10, with filter factors $F(kx, ky; k)$ with a peak for $kx^2+ky^2 = k^2$ and a bandwidth around this peak. Spatial domain representations of the filter results may be obtained by applying an inverse Fourier transform to the Fourier transform domain results. Of course, the band pass filtering may alternatively be performed using convolutions in the spatial domain. For each position on the surface of the plate 10, the filter results for the filters in the set define a set of values for different pass band frequency kc.

Optionally a multiple dimensional Hilbert-transform is calculated and used for transforming the complex-valued filter results to real values. If the multiple dimensional Hilbert-transform is used, the results can be combined to filter results Q0, Qx, Qy, expressed in the Fourier space kx, ky. Herein Q0 is the band pass filter result for a given band filter frequency kc and Qx and Qy are the products of Q0 with factors $-ikx/|k|$ and $-iky/|k|$ respectively, with $|k| = sqrt(kx^2+ky^2)$. The Fourier transforms of Q0, Qx, Qy in x, y space for the given pass band frequency kc will be denoted q0, qx, qy, From these a multi-dimensional envelope "a(x,y)", which is the amplitude of a vector formed by q0, qx, qy (i.e. $a = sqrt(q0^2 + qx^2 + qy^2)$).

In a second sub-step 252, it is determined for each of an array of positions (x, y) in the spatial domain representation which of the bandpass filters in the set produces the largest amplitude result of filtered vibrations at that position (x, y). When the multiple dimensional Hilbert-transform is used, the value of the pass band frequency kc for which a takes its maximum value may be used. The passband frequency kc of the bandpass filter that produces the largest amplitude result defines a wave vector amplitude k(x,y) for that position (x, y). This wave vector amplitude or its inverse may be used as an indication of the thickness of plate 10 at position (x, y). Similarly, the ratio omega/k(x,y), i.e. the phase velocity at the position (x,y) may be used as such an indication. In sixth step 26 a map of such a thickness indications for a range of positions (x, y) may be displayed.

In an embodiment such phase velocity values may be determined for a plurality of time domain frequencies and averaged to obtain a compound phase velocity values as a function of position (x,y). Thus a more robust thickness indication may be obtained for the position (x,y).

Furthermore, instead of a velocity map, an image of a map of the thickness may be displayed, obtained by applying thickness calibration factors to the phase velocities or from a look-up table for looking up thickness values based om phase velocity values. The thickness calibration factors or the look-up table may be estimated from the dispersion curve from the measurements assuming a nominal thickness of the panel is known. If the dispersion curve is already known, this can be used instead. Once the dispersion curve is obtained, the local phase velocity measurements at each frequency can be translated into a local thickness/stiffness.

When plate 10 is made of a material with anisotropic sound propagation properties, a modified computation may be used to obtain more accurate results. Anisotropic sound propagation properties may arise for example when the material of plate 10 contains fibers that, at least on average, are aligned along a same preference direction, or if plate 10 is made up of a plurality of layers containing fibers, the fibers in different layers being aligned along different directions, at least on average. In this case the stiffness of plate 10, or the stiffness of layers in plate 10, may be different in different directions.

Anisotropic sound propagation properties can give rise to phase velocities with a dependence on propagation direction, and this dependence may furthermore depend on sound frequency. For a given plate composition and thickness "d", the propagation direction "phi" and sound frequency "f" dependent phase velocity c(phi,f,d) can be determined from measurements or by modelling or simulation..

It is desirable to distinguish phase velocity variations that result from such dependence from phase velocity variations due to thickness variations. It is also desirable to compute the map of thickness from the wavefield without creating artifacts due to propagation direction dependence.

It is possible to do so by modifying second sub-step 252, by adding a determination of the direction "phi" of the wave vector for which the bandpass filter produced the largest amplitude result at the position (x, y). For example, the $kx_{max}$, $ky_{max}$ values that correspond to the largest output of the filter may be used and the direction phi may be obtained according to tg(phi)=ky/kx. When the multiple dimensional Hilbert-transform is used, the angle phi may be determined from tg(phi)=qy/qx at the value of the pass band frequency kc for which the envelope "a" takes its maximum value.

Subsequently, the value of the thickness "d" for the position (x, y) may be determined for which c(phi, f, d) equals the local phase velocity (f/k(x,y)) measured at the frequency "f", using a predetermined c(phi, f, d) obtained from measurements or modelling or simulation of the propagation direction, phi, dependent phase velocity c(phi, f, d) for the given plate composition and thickness "d". The thickness values that have been determined in this way may be used in the thickness map or for detection of the location of defects.

This method is useful when the structure is a plate with anisotropic sound propagation properties and the vibrations are part of a Lamb wave. To be able to produce a more accurate thickness estimate under such circumstances the method comprises computing a wave vector direction of the vibrations as a function of position on the surface from the position dependent estimation of the sound amplitude and/or phase at the surface; and determining estimated thickness as a function of position on the surface, from the wave vector direction and a predetermined relation between the phase velocity of the Lamb wave and a combination of the thickness and the wave vector direction.

Microphone calibration

Using an array of microphones 14 is beneficial compared to use of a single microphone because the data acquisition time is reduced considerably. However, use of a plurality of microphones may create errors due to sensor-related variations in the measurement.

In an embodiment, calibration factors f(i) may be applied to the measurements of the sound signals from different microphones 14 indexed by "i", before the step of inverse wave field propagation. In a further embodiment time domain frequency dependent calibration factors f(i, omega) may be applied.

The calibration factors f(i) are used to ensure that the same results as with single microphone inspection can be obtained. The determination of the calibration factors comprises scanning the position of the array of microphones (e.g. in the length direction of the array if a linear, one dimensional array is used), where the scan step size equals the pitch of the array. This means that a scan step moves each microphone 14 in the array to the position of the next microphone 14 (for those microphones 14 where there is a next microphone). If the microphones 14 would have the same sensitivity, the responses of the different microphones to the same excitation, when at the same position should be equal, regardless of the effect of plate 10 on the response. However, because of inter-microphone variations, significant differences in response magnitude and phase may be present.

In the process of selecting calibration factors, processing system 18 causes the array of microphones 14 to move by a plurality of such scan steps. Processing system 18 records responses x(i) of the different microphones indexed by "i" when at the same position, in response to equal excitations with transducer 12. From the recorded responses, processing system 18 calculates a set of calibration factors that equalize the response of each microphones 14 when at a same position. This may be done for example by setting the calibration factor f(i) to f(i)=x(ref)/x(i). Herein, the reference response x(ref) may be the response of one of the microphones that is used as reference, or another reference such as an average of the response of different microphones. Alternatively, a set of calibration factors may be selected that minimizes a combination of deviations between the responses of the microphones 14 at a plurality of time delays and/or at a plurality of positions. Optionally, different sets of calibration factors f(i, omega) may be computed for different excitations frequencies.

Moreover this method can be used to verify that all microphones in the array work properly.

Although an example has been described wherein the wave vector amplitude is used to form an image of the thickness of a plate, using the dispersion relation for Lamb waves, it should be appreciated that the wave vector amplitude may be alternatively be used to form an image. In this case the thickness of the structure may be so large that fluid-solid interface waves are excited, such as Rayleigh or Scholte waves. Such an image may be representative of position dependent variation of local properties of a structure such as variation of stiffness (or elasticity modulus), density and Poisson ratio. In turn such properties may be indicative of the material composition in the structure or its moisture content. The structure may be a concrete building structure for example. It has been confirmed experimentally for measurements using Rayleigh waves propagating in concrete that such waves have sufficient out of plane motion to be detected.

Although it is preferred to use lowest order waves, e.g. A0 mode Lamb waves, it should be noted that higher order waves may be used instead. It suffices that the mode comprises out-of-plane motion so that a measurable amount of sound energy radiates into the medium between the structure and the array of microphones 14.

**Claims**

1. A method of determining a position dependent wave vector amplitude of vibrations on a surface of a structure (10), the method comprising

- providing an array of microphones in a fluid medium outside the structure at a measurement position configured to receive sound from the surface of the structure;
- generating vibrations in the structure, whereby the sound is generated outside the structure by leakage of sound waves from the surface of the structure;
- using the array of microphones (14) to obtain measured signals from the sound at the microphones;
- obtaining a measurement of at least one parameter of an inverse wave field propagation model for sound propagation in the fluid medium between the surface of the structure and the array of microphones, wherein the measurement of the at least one parameter depends on the measurement position where the array of microphones is provided;
- applying the inverse wave field propagation model to the measured signals to obtain a position dependent estimation of the sound amplitude and/or phase at the surface;

- computing the wave vector amplitude of the vibration as a function of position on the surface from the position dependent estimation.

2. A method according to any one of the preceding claims, wherein the surface of the structure is flat and the array of microphones is a flat planar array, parallel to the surface of the structure, and wherein obtaining the measurement of at least one parameter comprises obtaining a measurement of a distance between the surface of the structure and the array of microphones.

3. A method according to any one of the preceding claims, wherein the array of microphones is an at least partly synthetic array, realized by moving at least one microphone relative to the structure along a direction transverse to the normal direction of at least part of the surface of the structure, and obtaining the measured signals in synchrony with the generation of the vibrations.

4. A method according to any one of the preceding claims, comprising using a property of sound received by at least one of the microphones of the array of microphones to measure the distance.

5. A method according to any one of the preceding claims, wherein the surface of the structure is a curved surface and wherein the inverse wave field propagation model is a structure surface shape dependent model, the at least one parameter being structure surface dependent.

6. A method according to any one of the preceding claims, comprising using sound received by at least one of the microphones of the array of microphones to measure directions from which sound waves arrive at the array of microphones from the surface of the structure, determining an estimated shape of the surface of the structure from the directions and setting the at least one parameter of the inverse wave field propagation model according to said estimated shape.

7. A method according to any one of the preceding claims, comprising

- moving the array of microphones to successive different measurement positions relative to the structure,
- receiving sound from the surface of the structure with the array of microphones at each of the successive different measurement positions,
- applying the inverse wave field propagation model to the measured signals of each of the successive different measurement positions to obtain a position dependent estimation of the sound amplitude and/or phase at the surface for the measurement position; and
- computing the wave vector amplitude of a Lamb wave as a function of position on the surface from the position dependent estimation for the measurement position;
- integrating the wave vector amplitude obtained for the different measurement positions into a map.

8. A method according any one of the preceding claims, wherein the structure is a plate and the vibrations are part of a Lamb wave, the method comprising

- applying plurality of filters that pass the vibrations at a position on the surface each in a respective band of wave vector amplitudes at a respective passband frequency k;
- selecting one of the filters that produces the largest filtered vibration;
- using the respective passband frequency k of the selected one of the filters as an indication of the thickness of plate at the position on the surface.

9. A method according any one of the preceding claims, wherein the structure is a plate with anisotropic sound propagation properties and the vibrations are part of a Lamb wave, the method comprising

- computing a wave vector direction of the vibrations as a function of position on the surface from the position dependent estimation of the sound amplitude and/or phase at the surface;
- determining estimated thickness as a function of position on the surface, from the wave vector amplitude and direction and a predetermined relation between the phase velocity of the Lamb wave and a combination of the thickness and the wave vector amplitude and direction.

10. A method according to any one of the preceding claims, the method comprising obtaining preliminary measured signals from the sound at the microphones and obtaining the measured signals by applying calibrations factors of individual ones of the microphones to the preliminary measured signals, wherein the calibrations factors are determined by

- moving the array of microphones relative to the surface of the surface of the structure so that the individual ones of the microphones are successively moved to a same reference position relative to the surface of the structure,
- obtaining calibration measurements from the individual ones of the microphones each when the individual one of the microphone is at the reference position, and
- determining the calibration factors to compensate for differences between the calibration measurements obtained from the individual ones of the microphones.

11. An acoustic inspection device comprising

- a carrier (16);
- an array of microphones (14) fixed to the carrier, or at least one microphone fixed to the carrier and means to synthesize the array of microphones using the at least one microphone;
- a transducer (12) configured to generate vibrations in a structure;
- a processing system (18) configured to obtain a measurement of at least one parameter of an inverse wave field propagation model; obtain measured signals from the microphones; apply the inverse wave field propagation model to the measured signals to obtain a position dependent estimation of the sound amplitude and/or phase at the surface; and to compute the wave vector amplitude of the Lamb wave as a function of position on the surface from the position dependent estimation.

12. The acoustic inspection device of claim 11, comprising a movement actuator configured to move the carrier with the array of microphones to successive different relative positions relative to the structure, the processing circuit being configured to

- cause the movement actuator to move the carrier with the array;
- receive sound from the surface of the structure with the array of microphones at each of the successive different measurement positions,
- obtain the measurement of at least one parameter of the inverse wave field propagation model for at least different measurement positions;
- apply the inverse wave field propagation model to the measured signals of each of the successive different measurement positions to obtain a position dependent estimation of the sound amplitude and/or phase at the surface for the measurement position; and
- compute the wave vector amplitude of the Lamb wave as a function of position on the surface from the position dependent estimation for the measurement position;
- integrate the wave vector amplitude obtained for the different measurement positions into a map.

13. The acoustic inspection device of any one of claims 11 or12, wherein the processing circuit is configured to use sound received by at least one of the microphones of the array of microphones to measure a distance between the array of microphones and the structure, for use in the at least one parameter.

14. The acoustic inspection device of any one of claims 11-13, wherein the processing circuit is configured to use sound received by the microphones of the array of microphones to measure directions from which sound waves arrive at the array of microphones, estimate a shape of the surface of the structure from the directions and set the at least one parameter of the inverse wave field propagation model according to said shape.

15. The acoustic inspection device of any one of claims 11-13, wherein the processing circuit is configured to obtain preliminary measured signals from the sound at the microphones and to obtain the measured signals by applying calibrations factors of individual ones of the microphones to the preliminary measured signals, wherein the calibrations factors are determined by

- moving the array of microphones relative to the surface of the structure so that the individual ones of the microphones are successively moved to a same reference position relative to the surface of the structure,
- obtaining calibration measurements from the individual ones of the microphones each when the individual one of the microphone is at the reference position, and
- determining the calibration factors to compensate for differences between the calibration measurements obtained from the individual ones of the microphones.

**Patentansprüche**

1. Verfahren zum Bestimmen einer positionsabhängigen Wellenvektoramplitude von Schwingungen auf einer Oberfläche einer Struktur (10), wobei das Verfahren umfasst

   - Bereitstellen einer Anordnung von Mikrofonen in einem fluiden Medium außerhalb der Struktur an einer Messposition, dazu ausgestaltet, Schall von der Oberfläche der Struktur zu empfangen;
   - Erzeugen von Schwingungen in der Struktur, wobei der Schall außerhalb der Struktur durch Austritt von Schallwellen aus der Oberfläche der Struktur erzeugt wird;
   - Verwenden der Anordnung von Mikrofonen (14), um an den Mikrofonen von dem Schall gemessene Signale zu erhalten;
   - Erhalten eines Messwerts mindestens eines Parameters eines inversen Wellenfeldausbreitungsmodells für Schallausbreitung in dem fluiden Medium zwischen der Oberfläche der Struktur und der Anordnung von Mikrofonen, wobei der Messwert des mindestens einen Parameters von der Messposition abhängt, an der die Anordnung von Mikrofonen bereitgestellt ist;
   - Anwenden des inversen Wellenfeldausbreitungsmodells auf die gemessenen Signale, um eine positionsabhängige Schätzung der Schallamplitude und/oder -phase an der Oberfläche zu erhalten;
   - Berechnen der Wellenvektoramplitude der Schwingung als Funktion der Position auf der Oberfläche aus der positionsabhängigen Schätzung.

2. Verfahren nach einem der vorhergehenden Ansprüche, wobei die Oberfläche der Struktur flach ist und die Anordnung von Mikrofonen eine flache, ebene Anordnung ist, parallel zur Oberfläche der Struktur, und wobei das Erhalten des Messwerts mindestens eines Parameters das Erhalten eines Messwerts eines Abstands zwischen der Oberfläche der Struktur und der Anordnung von Mikrofonen umfasst.

3. Verfahren nach einem der vorangehenden Ansprüche, wobei die Anordnung von Mikrofonen eine zumindest teilweise synthetische Anordnung ist, die dadurch realisiert wird, dass zumindest ein Mikrofon relativ zur Struktur entlang einer Richtung quer zur Normalrichtung mindestens eines Teils der Oberfläche der Struktur bewegt wird, und die gemessenen Signale synchron mit der Erzeugung der Schwingungen erhalten werden.

4. Verfahren nach einem der vorhergehenden Ansprüche, umfassend die Verwendung einer Eigenschaft von Schall, empfangen von mindestens einem der Mikrofone der Anordnung von Mikrofonen, um die Entfernung zu messen.

5. Verfahren nach einem der vorhergehenden Ansprüche, wobei die Oberfläche der Struktur eine gewölbte Oberfläche ist und wobei das inverse Wellenfeldausbreitungsmodell ein von der Strukturoberflächenform abhängiges Modell ist, wobei der mindestens eine Parameter strukturoberflächenabhängig ist.

6. Verfahren nach einem der vorhergehenden Ansprüche, umfassend das Verwenden von Schall, der von mindestens einem der Mikrofone der Anordnung von Mikrofonen empfangen wurde, um Richtungen zu messen, aus denen Schallwellen an der Anordnung von Mikrofonen von der Oberfläche der Struktur ankommen, das Bestimmen einer geschätzten Form der Oberfläche der Struktur aus den Richtungen und das Einrichten des mindestens einen Parameters des inversen Wellenfeldausbreitungsmodells entsprechend der geschätzten Form.

7. Verfahren nach einem der vorhergehenden Ansprüche, umfassend

   - Bewegen der Anordnung von Mikrofonen in aufeinanderfolgende verschiedene Messpositionen relativ zur Struktur,
   - Empfangen von Schall von der Oberfläche der Struktur mit der Anordnung von Mikrofonen an jeder der aufeinanderfolgenden verschiedenen Messpositionen,
   - Anwenden des inversen Wellenfeldausbreitungsmodells auf die gemessenen Signale jeder der aufeinanderfolgenden verschiedenen Messpositionen, um eine positionsabhängige Schätzung der Schallamplitude und/oder -phase an der Oberfläche für die Messposition zu erhalten; und
   - Berechnen der Wellenvektoramplitude einer Lamb-Welle als Funktion der Position auf der Oberfläche aus der positionsabhängigen Schätzung für die Messposition;
   - Integrieren der für die verschiedenen Messpositionen erhaltenen Wellenvektoramplitude in eine Karte.

8. Verfahren nach einem der vorhergehenden Ansprüche, wobei die Struktur eine Platte ist und die Schwingungen Teil einer Lamb-Welle sind, wobei das Verfahren umfasst

- Anwenden einer Mehrzahl an Filtern, die die Schwingungen an einer Position auf der Oberfläche jeweils in einem entsprechenden Band von Wellenvektoramplituden bei einer jeweiligen Passbandfrequenz k hindurchlassen;
- Auswählen eines der Filter, der die größte gefilterte Schwingung erzeugt;
- Verwenden der jeweiligen Passbandfrequenz k des ausgewählten einen der Filter als eine Angabe der Plattendicke an der Position auf der Oberfläche.

9. Verfahren nach einem der vorhergehenden Ansprüche, wobei die Struktur eine Platte mit anisotropen Schallausbreitungseigenschaften ist und die Schwingungen Teil einer Lamb-Welle sind, wobei das Verfahren umfasst

- Berechnen einer Wellenvektorrichtung der Schwingungen als Funktion der Position auf der Oberfläche aus der positionsabhängigen Schätzung der Schallamplitude und/oder -phase an der Oberfläche;
- Bestimmen der geschätzten Dicke als Funktion der Position auf der Oberfläche, aus der Wellenvektoramplitude und -richtung und einem vorbestimmten Verhältnis zwischen der Phasengeschwindigkeit der Lamb-Welle und einer Kombination der Dicke und der Wellenvektoramplitude und - richtung.

10. Verfahren nach einem der vorhergehenden Ansprüche, wobei das Verfahren das Erhalten vorläufig gemessener Signale aus dem Schall an den Mikrofonen und das Erhalten der gemessenen Signale durch Anwenden von Kalibrierfaktoren einzelner der Mikrofone auf die vorläufig gemessenen Signale umfasst, wobei die Kalibrierfaktoren bestimmt werden durch

- Bewegen der Anordnung von Mikrofonen relativ zur Oberfläche der Oberfläche der Struktur, so dass die einzelnen Mikrofone nacheinander in eine gleiche Referenzposition relativ zur Oberfläche der Struktur bewegt werden,
- Erhalten von Kalibriermesswerten von den einzelnen Mikrofonen jeweils dann, wenn sich das einzelne Mikrofon in der Referenzposition befindet, und
- Bestimmen der Kalibrierfaktoren zum Ausgleichen von Unterschieden zwischen den Kalibriermesswerten, die von den einzelnen Mikrofonen erhalten wurden.

11. Akustische Prüfeinrichtung, umfassend

- einen Träger (16);
- eine Anordnung von Mikrofonen (14), befestigt am Träger, oder mindestens ein Mikrofon,
befestigt am Träger, und Mittel zum Synthetisieren der Anordnung von Mikrofonen unter Verwendung des mindestens einen Mikrofons;

  - einen Wandler (12),

dazu ausgestaltet, Schwingungen in einer Struktur zu erzeugen;

  - ein Verarbeitungssystem (18),

dazu ausgestaltet, einen Messwert mindestens eines Parameters eines inversen Wellenfeldausbreitungsmodells zu erhalten; gemessene Signale von den Mikrofonen zu erhalten; das inverse Wellenfeldausbreitungsmodell auf die gemessenen Signale anzuwenden, um eine positionsabhängige Schätzung der Schallamplitude und/oder -phase an der Oberfläche zu erhalten; und die Wellenvektoramplitude der Lamb-Welle als Funktion der Position auf der Oberfläche aus der positionsabhängigen Schätzung zu berechnen.

12. Akustische Inspektionseinrichtung nach Anspruch 11, umfassend einen Bewegungsaktuator, der dazu ausgestaltet ist, den Träger mit der Anordnung von Mikrofonen zu aufeinanderfolgenden verschiedenen relativen Positionen relativ zur Struktur zu bewegen, wobei die Verarbeitungsschaltung dazu ausgestaltet ist

- den Bewegungsaktuator zu veranlassen, den Träger mit der Anordnung zu bewegen;
- Schall von der Oberfläche der Struktur mit der Anordnung von Mikrofonen an jeder der aufeinanderfolgenden verschiedenen Messpositionen zu empfangen,
- den Messwert mindestens eines Parameters des inversen Wellenfeldausbreitungsmodells für mindestens unterschiedliche Messpositionen zu erhalten;
- das inverse Wellenfeldausbreitungsmodell auf die gemessenen Signale jeder der aufeinanderfolgenden verschiedenen Messpositionen anzuwenden, um eine positionsabhängige Schätzung der Schallamplitude und/oder -phase an der Oberfläche für die Messposition zu erhalten; und
- die Wellenvektoramplitude der Lamb-Welle als Funktion der Position auf der Oberfläche aus der positionsabhängigen Schätzung für die Messposition zu berechnen;
- die für die verschiedenen Messpositionen erhaltene Wellenvektoramplitude in eine Karte zu integrieren.

13. Akustische Inspektionseinrichtung nach einem der Ansprüche 11 oder 12, wobei die Verarbeitungsschaltung dazu ausgestaltet ist, von mindestens einem der Mikrofone der Anordnung von Mikrofonen empfangenen Schall zu verwenden, um einen Abstand zwischen der Anordnung von Mikrofonen und der Struktur zu messen, zur Verwendung in dem mindestens einen Parameter.

14. Akustische Inspektionseinrichtung nach einem der Ansprüche 11 bis 13, wobei die Verarbeitungsschaltung dazu ausgestaltet ist, Schall, der von den Mikrofonen der Anordnung von Mikrofonen empfangen wird, um Richtungen zu messen, aus denen Schallwellen an der Anordnung von Mikrofonen ankommen, eine geschätzte Form der Oberfläche der Struktur aus den Richtungen zu schätzen und den mindestens einen Parameter des inversen Wellenfeldausbreitungsmodells entsprechend der Form einzurichten.

15. Akustische Inspektionseinrichtung nach einem der Ansprüche 11-13, wobei die Verarbeitungsschaltung dazu ausgestaltet ist, vorläufig gemessene Signale aus dem Schall an den Mikrofonen zu erhalten und die gemessenen Signale durch Anwenden von Kalibrierfaktoren einzelner der Mikrofone auf die vorläufig gemessenen Signale zu erhalten, wobei die Kalibrierfaktoren bestimmt werden durch

- Bewegen der Anordnung von Mikrofonen relativ zur Oberfläche der Struktur, so dass die einzelnen Mikrofone nacheinander in eine gleiche Referenzposition relativ zur Oberfläche der Struktur bewegt werden,
- Erhalten von Kalibriermesswerten von den einzelnen Mikrofonen jeweils dann, wenn sich das einzelne Mikrofon in der Referenzposition befindet, und
- Bestimmen der Kalibrierfaktoren zum Ausgleichen von Unterschieden zwischen den Kalibriermesswerten, die von den einzelnen Mikrofonen erhalten wurden.

## Revendications

1. Procédé de détermination d'une amplitude de vecteur d'onde dépendant de la position de vibrations sur une surface d'une structure (10), le procédé comprenant les étapes consistant à :

- fournir un réseau de microphones dans un milieu fluide à l'extérieur de la structure dans une position de mesure configurée pour recevoir un son depuis la surface de la structure ;
- générer des vibrations dans la structure, le son étant généré à l'extérieur de la structure par fuite d'ondes sonores depuis la surface de la structure ;
- utiliser le réseau de microphones (14) pour obtenir des signaux mesurés à partir du son au niveau des microphones ;
- obtenir une mesure d'au moins un paramètre d'un modèle de propagation de champ d'onde inverse pour une propagation de son dans le milieu fluide entre la surface de la structure et le réseau de microphones, dans lequel la mesure du au moins un paramètre dépend de la position de mesure dans laquelle le réseau de microphones est fourni ;
- appliquer le modèle de propagation de champ d'onde inverse aux signaux mesurés pour obtenir une estimation dépendant de la position de l'amplitude et/ou de la phase du son au niveau de la surface ;
- calculer l'amplitude de vecteur d'onde de la vibration en fonction de la position sur la surface à partir de l'estimation dépendant de la position.

2. Procédé selon l'une quelconque des revendications précédentes, dans lequel la surface de la structure est plate et le réseau de microphones est un réseau plan plat, parallèle à la surface de la structure, et dans lequel l'obtention de la mesure d'au moins un paramètre comprend l'obtention d'une mesure d'une distance entre la surface de la structure et le réseau de microphones.

3. Procédé selon l'une quelconque des revendications précédentes, dans lequel le réseau de microphones est un réseau au moins partiellement synthétique, réalisé en déplaçant au moins un microphone par rapport à la structure le long d'une direction transversale à la direction normale d'au moins une partie de la surface de la structure, et en obtenant les signaux mesurés en synchronisation avec la génération des vibrations.

4. Procédé selon l'une quelconque des revendications précédentes, comprenant l'utilisation d'une propriété d'un son reçu par au moins l'un des microphones du réseau de microphones pour mesurer la distance.

5. Procédé selon l'une quelconque des revendications précédentes, dans lequel la surface de la structure est une surface incurvée et dans lequel le modèle de propagation de champ d'onde inverse est un modèle dépendant de la forme de la surface de la structure, le au moins un paramètre dépendant de la surface de la structure.

6. Procédé selon l'une quelconque des revendications précédentes, comprenant les étapes consistant à utiliser un son reçu par au moins l'un des microphones du réseau de microphones pour mesurer des directions à partir desquelles des ondes sonores arrivent au niveau du réseau de microphones à partir de la surface de la structure, déterminer une forme estimée de la surface de la structure à partir des directions et régler le au moins un paramètre du modèle de propagation de champ d'onde inverse selon ladite forme estimée.

7. Procédé selon l'une quelconque des revendications précédentes, comprenant les étapes consistant à

   - déplacer le réseau de microphones vers différentes positions de mesure successives par rapport à la structure,
   - recevoir le son depuis la surface de la structure à l'aide du réseau de microphones au niveau de chacune des différentes positions de mesure successives,
   - appliquer le modèle de propagation de champ d'onde inverse aux signaux mesurés de chacune des différentes positions de mesure successives pour obtenir une estimation dépendant de la position de l'amplitude et/ou de la phase du son au niveau de la surface pour la position de mesure ; et
   - calculer l'amplitude de vecteur d'onde d'une onde de Lamb en fonction de la position sur la surface à partir de l'estimation dépendant de la position pour la position de mesure ;
   - intégrer l'amplitude de vecteur d'onde obtenue pour les différentes positions de mesure dans une carte.

8. Procédé selon l'une quelconque des revendications précédentes, dans lequel la structure est une plaque et les vibrations font partie d'une onde de Lamb, le procédé comprenant les étapes consistant à

   - appliquer une pluralité de filtres qui transmettent les vibrations au niveau d'une position sur la surface, chacun dans une bande respective d'amplitudes de vecteur d'onde à une fréquence de bande passante respective k ;
   - sélectionner un certain des filtres qui produit la plus grande vibration filtrée ;
   - utiliser la fréquence de bande passante respective k du certain sélectionné parmi les filtres comme une indication de l'épaisseur de plaque au niveau de la position sur la surface.

9. Procédé selon l'une quelconque des revendications précédentes, dans lequel la structure est une plaque avec des propriétés de propagation de son anisotrope et les vibrations font partie d'une onde de Lamb, le procédé comprenant les étapes consistant à

   - calculer une direction de vecteur d'onde des vibrations en fonction de la position sur la surface à partir de l'estimation dépendant de la position de l'amplitude et/ou de la phase du son au niveau de la surface ;
   - déterminer l'épaisseur estimée en fonction de la position sur la surface, à partir de l'amplitude et de la direction de vecteur d'onde et d'une relation prédéterminée entre la vitesse de phase de l'onde de Lamb et une combinaison de l'épaisseur et de l'amplitude et de la direction du vecteur d'onde.

10. Procédé selon l'une quelconque des revendications précédentes, le procédé comprenant les étapes consistant à obtenir des signaux mesurés préliminaires à partir du son au niveau des microphones et obtenir des signaux mesurés en appliquant des facteurs d'étalonnage de certains individuels des microphones aux signaux mesurés préliminaires, dans lequel les facteurs d'étalonnage sont déterminés en

   - déplaçant le réseau de microphones par rapport à la surface de la structure de telle sorte que les certains individuels soient déplacés successivement vers une même position de référence par rapport à la surface de la structure,
   - obtenant des mesures d'étalonnage à partir des certains individuels lorsque chacun des certains individuels des microphones est au niveau de la position de référence, et
   - déterminant les facteurs d'étalonnage pour compenser des différences entre les mesures d'étalonnage obtenues à partir des certains individuels des microphones.

**11.** Dispositif d'inspection acoustique, comprenant :

- un support (16) ;
- un réseau de microphones (14) fixés au support, ou au moins un microphone fixé au support et des moyens pour synthétiser le réseau de microphones à l'aide du au moins un microphone ;
- un transducteur (12) configuré pour générer des vibrations dans une structure ;
- un système de traitement (18) configuré pour obtenir une mesure d'au moins un paramètre d'un modèle de propagation de champ d'onde inverse ; obtenir des signaux mesurés à partir des microphones ; appliquer le modèle de propagation de champ d'onde inverse aux signaux mesurés pour obtenir une estimation dépendant de la position de l'amplitude et/ou de la phase du son au niveau de la surface ; et pour calculer l'amplitude de vecteur d'onde de l'onde de Lamb en fonction de la position sur la surface à partir de l'estimation dépendant de la position.

**12.** Dispositif d'inspection acoustique selon la revendication 11, comprenant un actionneur de déplacement configuré pour déplacer le support avec le réseau de microphones vers des positions relatives successives différentes par rapport à la structure, le circuit de traitement étant configuré pour

- amener l'actionneur de déplacement à déplacer le support avec le réseau ;
- recevoir un son depuis la surface de la structure avec le réseau de microphones au niveau de chacune des différentes positions de mesure successives,
- obtenir la mesure d'au moins un paramètre du modèle de propagation de champ d'onde inverse pour au moins différentes positions de mesure ;
- appliquer le modèle de propagation de champ d'onde inverse aux signaux mesurés de chacune des différentes positions de mesure successives pour obtenir une estimation dépendant de la position de l'amplitude et/ou de la phase du son au niveau de la surface pour la position de mesure ; et
- calculer l'amplitude du vecteur d'onde de l'onde de Lamb en fonction de la position sur la surface à partir de l'estimation dépendant de la position pour la position de mesure ;
- intégrer l'amplitude de vecteur d'onde obtenue pour les différentes positions de mesure dans une carte.

**13.** Dispositif d'inspection acoustique selon l'une quelconque des revendications 11 ou 12, dans lequel le circuit de traitement est configuré pour utiliser un son reçu par au moins un des microphones du réseau de microphones pour mesurer une distance entre le réseau de microphones et la structure, pour une utilisation dans le au moins un paramètre.

**14.** Dispositif d'inspection acoustique selon l'une quelconque des revendications 11 à 13, dans lequel le circuit de traitement est configuré pour utiliser un son reçu par les microphones du réseau de microphones pour mesurer des directions à partir desquelles des ondes sonores arrivent au niveau du réseau de microphones, estimer une forme de la surface de la structure à partir des directions et définir le au moins un paramètre du modèle de propagation de champ d'onde inverse selon ladite forme.

**15.** Dispositif d'inspection acoustique selon l'une quelconque des revendications 11 à 13, dans lequel le circuit de traitement est configuré pour obtenir des signaux mesurés préliminaires à partir du son au niveau des microphones et pour obtenir les signaux mesurés en appliquant des facteurs d'étalonnage de chacun des microphones aux signaux mesurés préliminaires, dans lequel les facteurs d'étalonnage sont déterminés en

- déplaçant le réseau de microphones par rapport à la surface de la structure de telle sorte que les certains individuels soient déplacés successivement vers une même position de référence par rapport à la surface de la structure,
- obtenant des mesures d'étalonnage à partir des certains individuels lorsque chacun des certains individuels des microphones est au niveau de la position de référence, et
- déterminant les facteurs d'étalonnage pour compenser des différences entre les mesures d'étalonnage obtenues à partir des certains individuels des microphones.

# Fig.1

# Fig.2

Fig.3a

## Fig. 3b

## Fig. 3c

# Fig.4

**Fig.5a**

**Fig. 5b**

Fig. 6

## REFERENCES CITED IN THE DESCRIPTION

**Patent documents cited in the description**

- KR 101693710

**Non-patent literature cited in the description**

- **FLYNN et al.** Toward utilizing Full-field Laser-Ultrasound for Practical Nondestructive Inspection with Acoustic Wavenumber Spectroscopy. *2018 IEEE International Ultrasonics Symposium (IUS), Kobe, Japan*, 2018, 1-7
- Visualization of hidden delamination and debonding in composites through noncontact laser ultrasonic scanning. *Composites Science and Technology*, 2014, vol. 100, 10-18
- **PÖRTZGEN et al.** Inverse Wave Field Extrapolation: A Different Approach to Imaging defects. *IEEE transactions on ultrasonics ferroelectrics and frequency control*, vol. 54, 118-127
- **PÖRTZGEN**. Advances in Imaging of NDT results. *WCNDT World Conference on NDT*, 30 August 2004, 1-8